(19) Europäisches Patentamt / European Patent Office / Office européen des brevets

(11) **EP 4 130 135 A1**

(12) **EUROPEAN PATENT APPLICATION**
published in accordance with Art. 153(4) EPC

(43) Date of publication:
08.02.2023 Bulletin 2023/06

(21) Application number: 21775805.1

(22) Date of filing: 23.03.2021

(51) International Patent Classification (IPC):
C08L 15/00 (1974.07)      C08L 27/16 (1974.07)
C08L 39/04 (1974.07)      H01M 4/13 (2010.01)
H01M 4/62 (1974.07)

(52) Cooperative Patent Classification (CPC):
C08L 15/00; C08L 27/16; C08L 39/04; H01M 4/13;
H01M 4/62; Y02E 60/10

(86) International application number:
PCT/JP2021/012070

(87) International publication number:
WO 2021/193665 (30.09.2021 Gazette 2021/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2020 JP 2020059073

(71) Applicant: Zeon Corporation
Tokyo 100-8246 (JP)

(72) Inventor: NAKAI Akito
Tokyo 100-8246 (JP)

(74) Representative: Maiwald GmbH
Elisenhof
Elisenstraße 3
80335 München (DE)

(54) **POSITIVE ELECTRODE FOR SECONDARY BATTERY, AND SECONDARY BATTERY**

(57)    Provided is a positive electrode for a secondary battery that can cause a secondary battery to display excellent battery characteristics. The positive electrode for a secondary battery includes a positive electrode mixed material layer and a current collector. The positive electrode mixed material layer contains a positive electrode active material, a conductive material, a polymer A including a nitrogen-containing heterocycle and having a weight-average molecular weight of not less than 300 and not more than 70,000, and a polymer B including a nitrile group. The positive electrode mixed material layer has a degree of nitrogen segregation of 1.4 or less as determined using an electron probe microanalyzer.

EP 4 130 135 A1

**Description**

TECHNICAL FIELD

The present disclosure relates to a positive electrode for a secondary battery and a secondary battery.

BACKGROUND

Secondary batteries such as lithium ion secondary batteries have characteristics such as compact size, light weight, high energy-density, and the ability to be repeatedly charged and discharged, and are used in a wide range of applications.

A positive electrode for a secondary battery normally includes a current collector and a positive electrode mixed material layer formed on the current collector. This positive electrode mixed material layer may be formed by applying, onto the current collector, a slurry composition having a positive electrode active material, a conductive material, a binder, and so forth dispersed in a dispersion medium, and then drying the slurry composition, for example.

In recent years, attempts have been made to improve positive electrode mixed material layers included on current collectors with the aim of achieving even higher performance of secondary batteries such as lithium ion secondary batteries (for example, refer to Patent Literature (PTL) 1 and 2).

CITATION LIST

Patent Literature

PTL 1: JP2013-8485A
PTL 2: WO2019/107463A1

SUMMARY

(Technical Problem)

There is room for improvement of a positive electrode including a positive electrode mixed material layer formed using a conventional technique such as described above in terms of further enhancing battery characteristics (rate characteristics, initial capacity, and cycle characteristics) of a secondary battery.

Accordingly, an object of the present disclosure is to provide a positive electrode for a secondary battery that can cause a secondary battery to display excellent battery characteristics and a secondary battery that has excellent battery characteristics.

(Solution to Problem)

The inventor conducted diligent investigation with the aim of solving the problem set forth above. The inventor discovered that through a positive electrode including a positive electrode mixed material layer that contains two specific types of polymers each having a chemical structure including a nitrogen atom and that has a degree of nitrogen segregation of not more than a specific value as measured by a specific method, it is possible to improve battery characteristics of a secondary battery, and, in this manner, completed the present disclosure.

Specifically, the present disclosure aims to advantageously solve the problem set forth above, and a presently disclosed positive electrode for a secondary battery comprises a positive electrode mixed material layer and a current collector, wherein the positive electrode mixed material layer contains: a positive electrode active material; a conductive material; a polymer A including a nitrogen-containing heterocycle and having a weight-average molecular weight of not less than 300 and not more than 70,000; and a polymer B including a nitrile group, and the positive electrode mixed material layer has a degree of nitrogen segregation of 1.4 or less as calculated by formula (1), shown below.

$$\text{Degree of nitrogen segregation} = N_{max}/N_{ave.} \quad (1)$$

In formula (1): $N_{ave.}$ is an average value for intensity of characteristic X-rays of nitrogen in an EPMA image of a thickness direction cross-section of the positive electrode mixed material layer obtained using an electron probe microanalyzer (EPMA); and Nmax is a maximum value among average values for intensity of characteristic X-rays of nitrogen in 5 regions obtained by equally dividing the positive electrode mixed material layer in the EPMA image into 5 regions in a thickness direction.

Through the positive electrode set forth above, it is possible to cause a secondary battery to display excellent rate characteristics while also increasing the initial capacity of the secondary battery. In addition, a secondary battery that includes the positive electrode set forth above has excellent cycle characteristics and can maintain a high capacity even after cycling.

Note that the "degree of nitrogen segregation" referred to in the present disclosure is a value that is calculated from "Nmax" and "Nave." as described above. In more detail, "Nmax" and "Nave." can be determined by a method described in the EXAMPLES section.

Moreover, the "weight-average molecular weight" referred to in the present disclosure can be measured by a method described in the EXAMPLES section.

Furthermore, a "polymer including a nitrogen-containing heterocycle and having a weight-average molecular weight of not less than 300 and not more than 70,000" is considered to correspond to the polymer A in the present disclosure and not to the polymer B even in a case in which the polymer includes a nitrile group.

In the presently disclosed positive electrode for a secondary battery, the positive electrode mixed material layer preferably further contains a binder. When the positive electrode mixed material layer further contains a binder, battery characteristics of a secondary battery can be further improved.

Note that the term "binder" as used in the present disclosure is not inclusive of polymers corresponding to the polymer A and the polymer B set forth above.

In the presently disclosed positive electrode for a secondary battery, the polymer B preferably includes a nitrile group-containing monomer unit and an alkylene structural unit, and the polymer B preferably includes the nitrile group-containing monomer unit in a proportion of not less than 10 mass% and not more than 60 mass% and has an iodine value of 70 mg/100 mg or less. By using the polymer B set forth above, it is possible to further improve battery characteristics of a secondary battery.

The phrase "includes a monomer unit" as used in the present disclosure means that "a polymer obtained with that monomer includes a repeating unit derived from the monomer".

Moreover, the phrase "includes an alkylene structural unit" as used in the present disclosure means that "a repeating unit composed of only an alkylene structure represented by a general formula $-C_nH_{2n}-$ (n is an integer of 2 or more) is included in a polymer".

Furthermore, the proportional contents of monomer units and structural units referred to in the present disclosure can be measured by a nuclear magnetic resonance (NMR) method such as $^1$H-NMR.

Also note that the "iodine value" referred to in the present disclosure can be measured by a method described in the EXAMPLES section.

In the presently disclosed positive electrode for a secondary battery, the nitrogen-containing heterocycle is preferably either or both of an optionally substituted imidazole ring and an optionally substituted pyridine ring. By using the polymer A including an optionally substituted imidazole ring and/or an optionally substituted pyridine ring as a nitrogen-containing heterocycle, it is possible to further improve battery characteristics of a secondary battery.

Note that the phrase "optionally substituted" as used in the present disclosure means "unsubstituted or having a substituent".

In the presently disclosed positive electrode for a secondary battery, the polymer A preferably includes a monomer unit including a nitrogen-containing heterocycle, and the polymer A preferably includes the monomer unit including the nitrogen-containing heterocycle in a proportion of 50 mass% or more. By using the polymer A set forth above, it is possible to further improve rate characteristics and initial capacity of a secondary battery.

In the presently disclosed positive electrode for a secondary battery, a mass ratio of content of the polymer A relative to content of the conductive material in the positive electrode mixed material layer is preferably not less than 0.03 and not more than 1.0. When the mass ratio of the content of the polymer A relative to the content of the conductive material is within the range set forth above, battery characteristics of a secondary battery can be further improved.

Moreover, the present disclosure aims to advantageously solve the problem set forth above, and a presently disclosed secondary battery comprises any one of the positive electrodes for a secondary battery set forth above. A secondary battery that includes the positive electrode set forth above has excellent rate characteristics while also having high initial capacity. In addition, this secondary battery has excellent cycle characteristics and can maintain high capacity even after cycling.

(Advantageous Effect)

According to the present disclosure, it is possible to provide a positive electrode for a secondary battery that can cause a secondary battery to display excellent battery characteristics and a secondary battery that has excellent battery characteristics.

DETAILED DESCRIPTION

The following provides a detailed description of embodiments of the present disclosure.

The presently disclosed positive electrode for a secondary battery is for use as a positive electrode of a secondary battery such as a lithium ion secondary battery. Moreover, the presently disclosed secondary battery includes the presently disclosed positive electrode for a secondary battery.

(Positive electrode for secondary battery)

The presently disclosed positive electrode includes at least a positive electrode mixed material layer and a current collector. Note that the presently disclosed positive electrode may include constituents other than the positive electrode mixed material layer and the current collector. For example, the presently disclosed positive electrode may include a known adhesive layer or heat-resistant layer on the positive electrode mixed material layer. Moreover, the presently disclosed positive electrode may include a positive electrode mixed material layer at just one side of the current collector or may include positive electrode mixed material layers at both sides of the current collector.

The presently disclosed positive electrode can cause a secondary battery to display excellent battery characteristics as a result of the positive electrode mixed material layer being a specific positive electrode mixed material layer described below.

Note that in a case in which the presently disclosed positive electrode includes positive electrode mixed material layers at both sides of the current collector, so long as at least one of these positive electrode mixed material layers is the specific positive electrode mixed material layer described below, it is possible to sufficiently improve battery characteristics of a secondary battery.

<Positive electrode mixed material layer>

The positive electrode mixed material layer contains a positive electrode active material, a conductive material, a polymer A, and a polymer B and may optionally contain a binder and/or other components.

<<Positive electrode active material>>

The positive electrode active material is not specifically limited and may be lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, $LiNi_{0.5}Mn_{1.5}O_4$, or the like.

One positive electrode active material may be used individually, or two or more positive electrode active materials may be used in combination in a freely selected ratio.

The proportion in which the positive electrode active material is contained in the positive electrode mixed material layer when the entire positive electrode mixed material layer is taken to be 100 mass% is preferably 80 mass% or more, more preferably 90 mass% or more, and even more preferably 92 mass% or more, and is preferably 99 mass% or less, and more preferably 98 mass% or less from a viewpoint of further improving battery characteristics of a secondary battery.

<<Conductive material>>

The conductive material is not specifically limited and examples thereof include conductive carbon materials and fibers, foils, and particles of various metals. The conductive carbon material may be carbon black (for example, acetylene black, Ketjenblack® (Ketjenblack is a registered trademark in Japan, other countries, or both), or furnace black), single-walled or multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layered or multilayered graphene, carbon non-woven fabric sheet obtained through pyrolysis of non-woven fabric formed of polymer fiber, or the like.

One conductive material may be used individually, or two or more conductive materials may be used in combination in a freely selected ratio.

The amount of the conductive material that is contained in the positive electrode mixed material layer is preferably 0.1 parts by mass or more, more preferably 0.5 parts by mass or more, and even more preferably 1 part by mass or more per 100 parts by mass of the positive electrode active material, and is preferably 10 parts by mass or less, more preferably 5 parts by mass or less, and even more preferably 2 parts by mass or less per 100 parts by mass of the positive electrode active material. When the content of the conductive material in the positive electrode mixed material layer is within any of the ranges set forth above, battery characteristics of a secondary battery can be further improved.

«Polymer A»

The polymer A is required to include a nitrogen-containing heterocycle and to have a weight-average molecular weight of not less than 300 and not more than 70,000. The polymer A having these properties can adsorb to the previously described conductive material and cause good dispersion of the conductive material in a slurry composition for a positive electrode that is used to form the positive electrode mixed material layer. Consequently, by using the polymer A, it is possible to improve battery characteristics of a secondary battery, which is presumed to be due to the formation of uniform electrical conduction paths with high density in the positive electrode mixed material layer.

[Nitrogen-containing heterocycle]

The nitrogen-containing heterocycle is normally a heterocycle formed through linking of at least nitrogen and carbon atoms in a ring form.
From a viewpoint of further improving battery characteristics of a secondary battery, it is preferable that the nitrogen-containing heterocycle displays aromaticity (i.e., is a nitrogen-containing aromatic heterocycle). Examples of such nitrogen-containing aromatic heterocycles include an imidazole ring, a pyridine ring, a pyrrole ring, a quinoline ring, an indole ring, a pyrimidine ring, a triazole ring, and a triazine ring.
Note that the polymer A may include one nitrogen-containing heterocycle or may include two or more nitrogen-containing heterocycles. Moreover, a plurality of nitrogen-containing heterocycles included in the polymer A may be composed of just one type of nitrogen-containing heterocycle or may be composed of two or more types of nitrogen-containing heterocycles.
Furthermore, the nitrogen-containing heterocycle may have a substituent. Examples of substituents that may optionally be included in the nitrogen-containing heterocycle include a methyl group, an ethyl group, a hydroxy group, and a carboxy group. Note that the nitrogen-containing heterocycle may have a substituent at just one position or may have substituents at two or more positions. Also note that the nitrogen-containing heterocycle may have one type of substituent or may have two or more types of substituents.

[Weight-average molecular weight]

The weight-average molecular weight of the polymer A is required to be not less than 300 and not more than 70,000 as previously described, is preferably 400 or more, more preferably 500 or more, even more preferably 700 or more, and particularly preferably 1,000 or more, and is preferably 50,000 or less, more preferably 30,000 or less, even more preferably 10,000 or less, and particularly preferably 5,000 or less. In a situation in which the weight-average molecular weight of the polymer A is less than 300, rate characteristics and initial capacity of a secondary battery deteriorate. On the other hand, in a situation in which the weight-average molecular weight of the polymer A is more than 70,000, cycle characteristics of a secondary battery deteriorate.

[Chemical composition]

No specific limitations are placed on the method by which the nitrogen-containing heterocycle described above is introduced into the polymer A. For example, a monomer including a nitrogen-containing heterocycle such as described above may be used to produce a polymer so as to obtain a polymer A that includes a monomer unit including the nitrogen-containing heterocycle, or any polymer may be modified so as to obtain a polymer A into which a nitrogen-containing heterocycle such as described above has been introduced, but the former of these methods is preferable. In other words, the polymer A is preferably a polymer that includes a monomer unit including a nitrogen-containing heterocycle.
The polymer A that includes a monomer unit including a nitrogen-containing heterocycle preferably includes either or both of an aromatic vinyl monomer unit and a nitrile group-containing monomer unit from a viewpoint of further improving battery characteristics of a secondary battery. Note that the polymer A may include repeating units (other repeating units) other than the monomer unit including a nitrogen-containing heterocycle, the aromatic vinyl monomer unit, and the nitrile group-containing monomer unit.

-Monomer unit including nitrogen-containing heterocycle-

Examples of monomers including a nitrogen-containing heterocycle that can form the monomer unit including a nitrogen-containing heterocycle include, but are not specifically limited to, vinylimidazole, vinylpyridine, vinylpyrrole, vinylquinoline, vinylindole, and vinyl pyrimidine. One of these monomers may be used individually, or two or more of these monomers may be used in combination in a freely selected ratio. Of these monomers, vinylimidazole and vinylpyridine are preferable from a viewpoint of further improving battery characteristics of a secondary battery.

The proportional content of the monomer unit including a nitrogen-containing heterocycle in the polymer A when all repeating units in the polymer A are taken to be 100 mass% is preferably 50 mass% or more, more preferably 60 mass% or more, even more preferably 70 mass% or more, and particularly preferably 80 mass% or more, and is preferably 95 mass% or less, and more preferably 90 mass% or less. When the proportional content of the monomer unit including a nitrogen-containing heterocycle in the polymer A is 50 mass% or more, rate characteristics and initial capacity of a secondary battery can be further improved. On the other hand, when the proportional content of the monomer unit including a nitrogen-containing heterocycle in the polymer A is 95 mass% or less, viscosity stability of a slurry composition for a positive electrode that is used to form the positive electrode mixed material layer can be increased, and, as a result, excellent battery characteristics of a secondary battery can be sufficiently ensured.

-Aromatic vinyl monomer unit-

Examples of aromatic vinyl monomers that can form the aromatic vinyl monomer unit include styrene, $\alpha$-methylstyrene, p-t-butylstyrene, butoxystyrene, vinyltoluene, chlorostyrene, and vinylnaphthalene. One aromatic vinyl monomer may be used individually, or two or more aromatic vinyl monomers may be used in combination in a freely selected ratio. Of these aromatic vinyl monomers, styrene is preferable from a viewpoint of further improving battery characteristics of a secondary battery.

In a case in which the polymer A includes an aromatic vinyl monomer unit, the proportional content of the aromatic vinyl monomer unit in the polymer A when all repeating units in the polymer A are taken to be 100 mass% is preferably 5 mass% or more, and more preferably 10 mass% or more, and is preferably 50 mass% or less, more preferably 40 mass% or less, even more preferably 30 mass% or less, and particularly preferably 20 mass% or less. When the proportional content of the aromatic vinyl monomer unit in the polymer A is 5 mass% or more, viscosity stability of a slurry composition for a positive electrode that is used to form the positive electrode mixed material layer can be increased, and, as a result, excellent battery characteristics of a secondary battery can be sufficiently ensured. On the other hand, when the proportional content of the aromatic vinyl monomer unit in the polymer A is 50 mass% or less, rate characteristics and initial capacity of a secondary battery do not excessively deteriorate.

-Nitrile group-containing monomer unit-

Examples of nitrile group-containing monomers that can form the nitrile group-containing monomer unit include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. One nitrile group-containing monomer may be used individually, or two or more nitrile group-containing monomers may be used in combination in a freely selected ratio. Of these nitrile group-containing monomers, acrylonitrile is preferable from a viewpoint of further improving battery characteristics of a secondary battery.

In a case in which the polymer A includes a nitrile group-containing monomer unit, the proportional content of the nitrile group-containing monomer unit in the polymer A when all repeating units in the polymer A are taken to be 100 mass% is preferably 5 mass% or more, and more preferably 10 mass% or more, and is preferably 50 mass% or less, more preferably 40 mass% or less, even more preferably 30 mass% or less, and particularly preferably 20 mass% or less. When the proportional content of the nitrile group-containing monomer unit in the polymer A is 5 mass% or more, viscosity stability of a slurry composition for a positive electrode that is used to form the positive electrode mixed material layer can be increased, and, as a result, excellent battery characteristics of a secondary battery can be sufficiently ensured. On the other hand, when the proportional content of the nitrile group-containing monomer unit in the polymer A is 50 mass% or less, rate characteristics and initial capacity of a secondary battery do not excessively deteriorate.

-Other repeating units-

Examples of other repeating units that can be included in the polymer A include monomer units derived from any monomers that are copolymerizable with a monomer including a nitrogen-containing heterocycle, an aromatic vinyl monomer, and a nitrile group-containing monomer. The polymer A may include one type of other repeating unit or may include two or more types of other repeating units.

The proportional content of other repeating units in the polymer A when all repeating units in the polymer A are taken to be 100 mass% is preferably not less than 0 mass% and not more than 10 mass%, and more preferably not less than 0 mass% and not more than 5 mass%.

[Production method]

No specific limitations are placed on the method by which the polymer A is produced. For example, the polymer A may be produced by performing polymerization in an aqueous solvent with respect to a monomer composition that contains one monomer or two or more monomers and then optionally performing modification. The proportional content of each monomer in the monomer composition can be set in accordance with the desired proportional content of each repeating unit (monomer unit and/or structural unit) in the polymer.

The polymerization method is not specifically limited and may be solution polymerization, suspension polymerization, bulk polymerization, emulsion polymerization, or the like. Moreover, ionic polymerization, radical polymerization, living radical polymerization, various types of condensation polymerization, addition polymerization, or the like may be adopted as the polymerization reaction. A known emulsifier and/or polymerization initiator may be used in the polymerization as necessary. Moreover, the modification can be performed by a known method.

[Content]

The amount of the polymer A that is contained in the positive electrode mixed material layer is preferably 0.01 parts by mass or more, more preferably 0.05 parts by mass or more, and even more preferably 0.1 parts by mass or more per 100 parts by mass of the positive electrode active material, and is preferably 2 parts by mass or less, more preferably 1 part by mass or less, and even more preferably 0.5 parts by mass or less per 100 parts by mass of the positive electrode active material. When the content of the polymer A in the positive electrode mixed material layer is 0.01 parts by mass or more per 100 parts by mass of the positive electrode active material, battery characteristics of a secondary battery can be further improved. On the other hand, when the content of the polymer A in the positive electrode mixed material layer is 2 parts by mass or less per 100 parts by mass of the positive electrode active material, viscosity stability of a slurry composition for a positive electrode that is used to form the positive electrode mixed material layer can be increased, and, as a result, excellent battery characteristics of a secondary battery can be sufficiently ensured.

A mass ratio of the content of the polymer A relative to the content of the conductive material in the positive electrode mixed material layer is preferably 0.03 or more, and more preferably 0.05 or more, and is preferably 1.0 or less, and more preferably 0.5 or less. When the value of polymer A/conductive material is within any of the ranges set forth above, viscosity stability of a slurry composition for a positive electrode that is used to form the positive electrode mixed material layer can be increased, and, as a result, excellent battery characteristics of a secondary battery can be sufficiently ensured.

«Polymer B»

The polymer B is required to include a nitrile group. The polymer B including a nitrile group can adsorb to the previously described positive electrode active material and conductive material and cause good dispersion thereof in a slurry composition for a positive electrode that is used to form the positive electrode mixed material layer. Therefore, by using the polymer B, it is possible to improve battery characteristics (particularly initial capacity) of a secondary battery through increased viscosity stability of the slurry composition for a positive electrode.

[Chemical composition]

No specific limitations are placed on the method by which the nitrile group is introduced into the polymer B. For example, a polymer may be produced using a nitrile group-containing monomer so as to obtain a polymer B that includes a nitrile group-containing monomer unit, or any polymer may be modified so as to obtain a polymer B into which a nitrile group has been introduced, but the former of these methods is preferable.

The polymer B including a nitrile group-containing monomer unit preferably includes either or both of an alkylene structural unit and an aromatic vinyl monomer unit, and, in particular, preferably includes an alkylene structural unit. Note that the polymer B may include repeating units (other repeating units) other than the nitrile group-containing monomer unit, the alkylene structural unit, and the aromatic vinyl monomer unit.

-Nitrile group-containing monomer unit-

Examples of nitrile group-containing monomers that can form the nitrile group-containing monomer unit include the same nitrile group-containing monomers as previously described in the "Polymer A" section. One nitrile group-containing monomer may be used individually, or two or more nitrile group-containing monomers may be used in combination in a freely selected ratio. Acrylonitrile is preferable as a nitrile group-containing monomer from a viewpoint of further improving battery characteristics of a secondary battery.

The proportional content of the nitrile group-containing monomer unit in the polymer B when all repeating units in the polymer B are taken to be 100 mass% is preferably 10 mass% or more, and more preferably 20 mass% or more, and is preferably 60 mass% or less, more preferably 50 mass% or less, and even more preferably 40 mass% or less. When the proportional content of the nitrile group-containing monomer unit in the polymer B is within any of the ranges set forth above, viscosity stability of a slurry composition for a positive electrode that is used to form the positive electrode mixed material layer can be increased, and, as a result, excellent battery characteristics of a secondary battery can be sufficiently ensured.

-Alkylene structural unit-

The alkylene structural unit may be linear or branched, but is preferably linear (i.e., is preferably a linear alkylene structural unit) from a viewpoint of further improving battery characteristics of a secondary battery.
Examples of methods by which the alkylene structural unit may be introduced into the polymer B include the following methods (1) and (2), but are not specifically limited thereto.

(1) A method in which a polymer is produced from a monomer composition containing a conjugated diene monomer and then the polymer is hydrogenated so as to convert a conjugated diene monomer unit to an alkylene structural unit
(2) A method in which a polymer is produced from a monomer composition containing a 1-olefin monomer

Of these methods, method (1) is preferable in terms of ease of production of the polymer B.
The conjugated diene monomer may be a conjugated diene compound having a carbon number of 4 or more such as 1,3-butadiene, isoprene, 2,3-dimethyl-1,3-butadiene, or 1,3-pentadiene, for example. Of these conjugated diene compounds, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene monomer unit (i.e., is more preferably a hydrogenated 1,3-butadiene unit).
The 1-olefin monomer may be ethylene, propylene, 1-butene, or the like, for example.
One of these conjugated diene monomers or 1-olefin monomers may be used individually, or two or more of these conjugated diene monomers or 1-olefin monomers may be used in combination in a freely selected ratio.
The proportional content of the alkylene structural unit in the polymer B when all repeating units in the polymer B are taken to be 100 mass% is preferably 10 mass% or more, more preferably 20 mass% or more, and even more preferably 25 mass% or more, and is preferably 90 mass% or less, more preferably 80 mass% or less, and even more preferably 70 mass% or less. When the proportional content of the alkylene structural unit in the polymer B is within any of the ranges set forth above, viscosity stability of a slurry composition for a positive electrode that is used to form the positive electrode mixed material layer can be increased, and, as a result, excellent battery characteristics of a secondary battery can be sufficiently ensured.

-Aromatic vinyl monomer unit-

Examples of aromatic vinyl monomers that can form the aromatic vinyl monomer unit include the same aromatic vinyl monomers as previously described in the "Polymer A" section. One aromatic vinyl monomer may be used individually, or two or more aromatic vinyl monomers may be used in combination in a freely selected ratio. Styrene is preferable as an aromatic vinyl monomer from a viewpoint of further improving battery characteristics of a secondary battery.
In a case in which the polymer B includes an aromatic vinyl monomer unit, the proportional content of the aromatic vinyl monomer unit in the polymer B when all repeating units in the polymer B are taken to be 100 mass% is preferably 20 mass% or more, more preferably 30 mass% or more, and even more preferably 40 mass% or more, and is preferably 70 mass% or less, more preferably 60 mass% or less, and even more preferably 50 mass% or less. When the proportional content of the aromatic vinyl monomer unit in the polymer B is within any of the ranges set forth above, viscosity stability of a slurry composition for a positive electrode that is used to form the positive electrode mixed material layer can be increased, and, as a result, excellent battery characteristics of a secondary battery can be sufficiently ensured.

-Other repeating units-

Examples of other repeating units that can be included in the polymer B include, but are not specifically limited to, a conjugated diene monomer unit that is used to introduce an alkylene structural unit but remains without being hydrogenated and an acidic group-containing monomer unit. The polymer B may include one type of other repeating unit or may include two or more types of other repeating units.

Examples of acidic group-containing monomers that can form the acidic group-containing monomer unit include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can be used as a carboxy group-containing monomer. Of these examples, acrylic acid and methacrylic acid are preferable as carboxy group-containing monomers.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl". Moreover, in the present disclosure, "(meth)acryl" is used to indicate "acryl" and/or "methacryl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

In a case in which the polymer B includes an acidic group-containing monomer unit, the proportional content of the acidic group-containing monomer unit in the polymer B when all repeating units in the polymer B are taken to be 100 mass% is preferably 1 mass% or more, and more preferably 2 mass% or more, and is preferably 20 mass% or less, more preferably 10 mass% or less, and even more preferably 7 mass% or less. When the proportional content of the acidic group-containing monomer unit in the polymer B is within any of the ranges set forth above, viscosity stability of a slurry composition for a positive electrode that is used to form the positive electrode mixed material layer can be increased, and, as a result, excellent battery characteristics of a secondary battery can be sufficiently ensured.

[Production method]

No specific limitations are placed on the method by which the polymer B is produced. For example, the polymer B may be produced by performing polymerization in an aqueous solvent with respect to a monomer composition that contains one monomer or two or more monomers and then optionally performing hydrogenation and/or modification. Note that the proportional content of each monomer in the monomer composition can be set in accordance with the desired proportional content of each repeating unit (monomer unit and/or structural unit) in the polymer.

The polymerization method is not specifically limited and may be solution polymerization, suspension polymerization, bulk polymerization, emulsion polymerization, or the like. Moreover, ionic polymerization, radical polymerization, living radical polymerization, various types of condensation polymerization, addition polymerization, or the like may be adopted as the polymerization reaction. A known emulsifier and/or polymerization initiator may be used in the polymerization as necessary. Moreover, the hydrogenation and modification can be performed by known methods.

[Weight-average molecular weight]

The weight-average molecular weight of the polymer B is preferably 10,000 or more, more preferably 50,000 or more, even more preferably more than 70,000, further preferably 100,000 or more, and particularly preferably 300,000 or more, and is preferably 1,000,000 or less, and more preferably 500,000 or less. When the weight-average molecular weight of the polymer B is within any of the ranges set forth above, viscosity stability of a slurry composition for a positive electrode that is used to form the positive electrode mixed material layer can be increased, and, as a result, excellent battery characteristics of a secondary battery can be sufficiently ensured.

[Iodine value]

The iodine of the polymer B is preferably 70 mg/100 mg or less, more preferably 60 mg/100 mg or less, and even more preferably 50 mg/100 mg or less. When the iodine value of the polymer B is not more than any of the specific values set forth above, viscosity stability of a slurry composition for a positive electrode that is used to form the positive electrode mixed material layer can be increased, and, as a result, excellent battery characteristics of a secondary battery can be sufficiently ensured. Note that no specific limitations are placed on the lower limit for the iodine value. For example, the iodine value of the polymer B can be set as 10 mg/100 mg or more, or can be set as 20 mg/100 mg or more.

The amount of the polymer B that is contained in the positive electrode mixed material layer is preferably 0.02 parts by mass or more, more preferably 0.1 parts by mass or more, and even more preferably 0.2 parts by mass or more per 100 parts by mass of the positive electrode active material, and is preferably 4 parts by mass or less, more preferably 2 parts by mass or less, and even more preferably 1 part by mass or less per 100 parts by mass of the positive electrode active material. When the content of the polymer B in the positive electrode mixed material layer is within any of the ranges set forth above, viscosity stability of a slurry composition for a positive electrode that is used to form the positive electrode mixed material layer can be increased, and, as a result, excellent battery characteristics of a secondary battery can be sufficiently ensured.

<<Binder>>

A binder that is optionally contained in the positive electrode mixed material layer is not specifically limited so long as it does not correspond to the polymer A or the polymer B described above and may be a known binder that can be used in positive electrodes of secondary batteries. Polyvinylidene fluoride is preferable as such a binder. One binder may be used individually, or two or more binders may be used in combination in a freely selected ratio.

The amount of the binder that is contained in the positive electrode mixed material layer is preferably 0.1 parts by mass or more, more preferably 0.5 parts by mass or more, and even more preferably 1.5 parts by mass or more per 100 parts by mass of the positive electrode active material, and is preferably 10 parts by mass or less, more preferably 5 parts by mass or less, and even more preferably 3 parts by mass or less per 100 parts by mass of the positive electrode active material. When the content of the binder in the positive electrode mixed material layer is within any of the ranges set forth above, a secondary battery can be caused to display even better battery characteristics.

<<Other components>>

The positive electrode mixed material layer may contain components other than the components described above. Examples of such other components include, but are not specifically limited to, known components that can be contained in positive electrode mixed material layers such as reinforcing materials, antioxidants, dispersants, rheological modifiers, and additives for electrolyte solution having a function of inhibiting electrolyte solution decomposition. One other component may be used individually, or two or more other components may be used in combination in a freely selected ratio.

<<Degree of nitrogen segregation>>

The positive electrode mixed material layer is required to have a degree of nitrogen segregation of 1.4 or less. The degree of nitrogen segregation is a value that is determined based on an EPMA image of a thickness direction cross-section obtained using an electron probe microanalyzer. Specifically, the degree of nitrogen segregation is calculated by the following formula (1) using an average value Nave. for the intensity of characteristic X-rays of nitrogen (N) in the EPMA image and a maximum value Nmax among average values for the intensity of characteristic X-rays of nitrogen in 5 regions that are obtained by equally dividing the positive electrode mixed material layer in the same image into 5 regions in the thickness direction (i.e., such that each region is of equal thickness).

$$\text{Degree of nitrogen segregation} = \text{Nmax}/\text{Nave.} \quad (1)$$

In other words, a smaller value for the degree of nitrogen segregation indicates less non-uniformity in the thickness direction distribution of nitrogen atoms in the positive electrode mixed material layer, whereas a larger value for the degree of nitrogen segregation indicates more non-uniformity in the thickness direction distribution of nitrogen atoms in the positive electrode mixed material layer.

The positive electrode mixed material layer included in the presently disclosed positive electrode has a low degree of nitrogen segregation of 1.4 or less as previously described. It is presumed that in such a positive electrode mixed material layer, the polymer A including a nitrogen-containing heterocycle and the polymer B including a nitrile group are sufficiently uniformly distributed in the thickness direction of the positive electrode mixed material layer without being concentrated at the surface of the positive electrode mixed material layer at a side corresponding to the current collector and/or at the surface of the positive electrode mixed material layer at the opposite side thereof to the current collector. Moreover, through the presently disclosed positive electrode including a positive electrode mixed material layer in which the polymer A and the polymer B are uniformly distributed in this manner, it is possible to cause the secondary battery to display excellent battery characteristics.

The degree of nitrogen segregation in the positive electrode mixed material layer is preferably 1.3 or less, and more preferably 1.2 or less from a viewpoint of causing a secondary battery to display even better battery characteristics. Note that the degree of nitrogen segregation in the positive electrode mixed material layer is 1.0 or more, and can be set as 1.1 or more, for example.

The degree of nitrogen segregation in the positive electrode mixed material layer can be reduced by inhibiting concentration of the polymer A and/or polymer B and causing uniform distribution of these polymers. For example, it is possible to form a positive electrode mixed material layer having a low degree of nitrogen segregation by producing a slurry composition for a positive electrode by a procedure that is subsequently described in the "Production method of positive electrode for secondary battery" section.

<<Thickness>>

The thickness of the positive electrode mixed material layer is preferably 10 $\mu$m or more, more preferably 20 $\mu$m or more, and even more preferably 30 $\mu$m or more, and is preferably 100 $\mu$m or less, more preferably 90 $\mu$m or less, and even more preferably 80 $\mu$m or less. When the thickness of the positive electrode mixed material layer is within any of the ranges set forth above, a secondary battery can be caused to display even better battery characteristics.

<Current collector>

The current collector included in the positive electrode is a material having electrical conductivity and electrochemical durability. Specifically, the current collector may, for example, be made of iron, copper, aluminum, nickel, stainless steel, titanium, tantalum, gold, platinum, or the like, and is preferably made of aluminum. One of the materials described above may be used individually, or two or more of the materials described above may be used in combination in a freely selected ratio.

<Production method of positive electrode for secondary battery>

No specific limitations are placed on the method by which the presently disclosed positive electrode set forth above is produced. For example, the presently disclosed positive electrode may be produced through a step of producing a slurry composition for a positive electrode that contains at least the positive electrode active material, the conductive material, the polymer A, the polymer B, and a dispersion medium (slurry production step), a step of applying the slurry composition for a positive electrode obtained in the slurry production step onto at least one side of the current collector (application step), a step of drying the slurry composition for a positive electrode that has been applied onto at least one side of the current collector so as to form a positive electrode mixed material layer on the current collector (drying step), and other optional steps.

«Slurry production step»

In the slurry production step, a slurry composition for a positive electrode is produced that contains the positive electrode active material, conductive material, polymer A, and polymer B previously described in the "Positive electrode mixed material layer" section and that optionally contains a binder and/or other components in a dispersion medium.

The dispersion medium of the slurry composition for a positive electrode may be water and/or an organic solvent. Examples of organic solvents that can be used include acetonitrile, N-methylpyrrolidone, acetylpyridine, cyclopentanone, N,N-dimethylacetamide, dimethylformamide, dimethyl sulfoxide, methylformamide, methyl ethyl ketone, furfural, and ethylenediamine. Of these organic solvents, N-methylpyrrolidone (NMP) is most preferable.

Note that the dispersion medium may be one type of dispersion medium used individually or may be a mixture of two or more types.

No specific limitations are placed on the procedure by which the above-described components are mixed. For example, the above-described components may be mixed all at once. However, from a viewpoint of causing sufficiently uniform distribution of the polymer A and the polymer B in the positive electrode mixed material layer and reducing the degree of nitrogen segregation, the slurry composition for a positive electrode is preferably obtained through a step of producing a conductive material paste that contains the polymer A, the polymer B, the conductive material, and the dispersion medium and a step of mixing the obtained conductive material paste with the positive electrode active material.

Moreover, from a viewpoint of further reducing the degree of nitrogen segregation, the conductive material paste is preferably produced through a step of mixing the polymer A and the conductive material to obtain a premix and a step of mixing this premix with the polymer B.

Note that mixing performed in production of the slurry composition for a positive electrode can be performed using a typical mixing device such as a disper blade, a mill, or a kneader, for example, without any specific limitations.

The positive electrode mixed material layer included in the presently disclosed positive electrode is a dried product of the slurry composition for a positive electrode described above. In other words, components contained in the positive electrode mixed material layer that is included in the positive electrode are components that were contained in the slurry composition for a positive electrode. Accordingly, the preferred ratio of each component (each solid component) in the slurry composition for a positive electrode is the same as the preferred ratio of each component in the positive electrode mixed material layer that is included in the presently disclosed positive electrode set forth above.

«Application step»

In the application step, the slurry composition for a positive electrode obtained in the slurry production step is applied onto the current collector. Examples of application methods that may be used include, but are not specifically limited to, doctor blading, dip coating, reverse roll coating, direct roll coating, gravure coating, extrusion coating, and brush coating. The thickness of the coating film on the current collector after application but before drying can be set as appropriate in accordance with the thickness of the positive electrode mixed material layer to be obtained through drying.

<<Drying step>>

In the drying step, the slurry composition for a positive electrode (coating film) that has been applied onto the current collector in the application step is dried. Any commonly known method may be adopted as the drying method without any specific limitations. Examples of drying methods that can be used include drying by warm, hot, or low-humidity air; drying in a vacuum; and drying by irradiation with infrared light, electron beams, or the like. The drying conditions can be set as appropriate depending on the type of solvent in the slurry composition for a positive electrode, the thickness of the coating film, and so forth.

<<Other steps>>

In production of the positive electrode, the positive electrode mixed material layer may be subjected to a pressing process (pressing step) by mold pressing, roll pressing, or the like after the drying step described above, for example. By performing the pressing step, it is possible to improve close adherence of the positive electrode mixed material layer and the current collector.

(Secondary battery)

A feature of the presently disclosed secondary battery is that it includes the presently disclosed positive electrode set forth above. The presently disclosed secondary battery has excellent rate characteristics and high initial capacity as a result of including the presently disclosed positive electrode. In addition, the presently disclosed secondary battery has excellent cycle characteristics and can maintain high capacity even after cycling.

Although the following describes, as one example, a case in which the secondary battery is a lithium ion secondary battery, the presently disclosed secondary battery is not limited to the following example. A lithium ion secondary battery that is an example of the presently disclosed secondary battery normally includes a positive electrode, a negative electrode, an electrolyte solution, and a separator, and has the presently disclosed positive electrode for a secondary battery as the positive electrode.

<Negative electrode>

Examples of negative electrodes that can be used in the lithium ion secondary battery that is an example of the presently disclosed secondary battery include known negative electrodes without any specific limitations. Specifically, a negative electrode that is obtained by forming a negative electrode mixed material layer on a current collector by a known production method can be used as a known negative electrode.

<Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and may, for example, be preferably 0.5 mass% to 15 mass%, more preferably 2 mass% to 13 mass%, and even more preferably 5 mass% to 10 mass%. Known additives such as vinylene carbonate, fluoroethylene carbonate, and ethyl methyl sulfone may be added to the electrolyte solution.

<Separator>

The separator is not specifically limited and may be any of those described in JP2012-204303A, for example. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material particles in the lithium ion secondary battery, and consequently increases the volumetric capacity. Moreover, the separator may be a separator that includes a heat-resistant layer and/or adhesive layer at one side or both sides thereof.

<Production method of lithium ion secondary battery>

The lithium ion secondary battery conforming with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure or evaluate the weight-average molecular weight and iodine value of a polymer, the degree of nitrogen segregation in a positive electrode mixed material layer, the viscosity stability of a slurry composition for a positive electrode, and the rate characteristics, initial capacity, and cycle characteristics of a secondary battery.

<Weight-average molecular weight>

The weight-average molecular weights of polymers A and B were measured by gel permeation chromatography (GPC). More specifically, the weight-average molecular weight was calculated as a standard substance-equivalent value by preparing a calibration curve for a standard substance using polystyrene. The measurement conditions were as follows.

<<Measurement conditions>>

Column: TSKgel αM × 2 (∅7.8 mm I.D. × 30 cm × 2 columns; produced by Tosoh Corporation)
Eluent: Dimethylformamide (50 mM lithium bromide, 10 mM phosphoric acid)
Flow rate: 0.5 mL/min
Sample concentration: Approximately 0.5 g/L (solid content concentration)
Injection volume: 200 μL
Column temperature: 40°C
Detector: Differential refractive index detector RI (HLC-8320 GPC RI detector produced by Tosoh Corporation)
Detector conditions: RI: Pol (+), Res (1.0 s)
Molecular weight marker: Standard polystyrene kit PStQuick K produced by Tosoh Corporation

<Iodine value>

The iodine value of a polymer B was measured in accordance with JIS K6235(2006).

<Degree of nitrogen segregation>

A produced lithium ion secondary battery was left at rest at a temperature of 25°C for 168 hours after injection of electrolyte solution. After being left at rest, the lithium ion secondary battery was dismantled, and the positive electrode was removed, was washed with dimethyl carbonate, and was dried under reduced pressure at 60°C. The dried positive electrode was embedded in a metal ring for EPMA measurement using epoxy resin, a Cross Section Polisher® (Cross Section Polisher is a registered trademark in Japan, other countries, or both) produced by JEOL Ltd. was used to perform mirror finishing of a positive electrode mixed material layer cross-section that was an observation surface, and then sputtering of Au was performed to produce a sample for cross-section observation.
Note that the positive electrode mixed material layer cross-section serving as an observation surface was taken to be a thickness direction cross-section that passed through a center of gravity of the positive electrode mixed material layer (essentially the center of the positive electrode mixed material layer having a cuboid shape). Observation by an EPMA under the following conditions was performed for some regions located in a central part of the cross-section.
Note that "central part of the cross-section" refers to a region that is within 10% of longitudinal direction width of the cross-section from a longitudinal center line in the cross-section (straight line passing along the longitudinal direction center of the cross-section and orthogonally intersecting with the thickness direction of the positive electrode mixed material layer).

<<Measurement conditions>>

Apparatus: Field emission electron probe microanalyzer (FE-EPMA) produced by JEOL Ltd.
Accelerating voltage: 10.0 kV
Beam size: 1 μm
Beam current: 0.2 μA
Interval: X = 0.4 μm, Y = 0.4 μm
Field of view: X = 120 μm, Y = 100 μm
Number of points: 300 × 250
Sampling time: 30.00 ms
Measured element: Nitrogen (N)

Moreover, the intensity of characteristic X-rays of nitrogen (N intensity of N Kα image) was displayed in the observed field of view, and an EPMA image indicating the distribution of the intensity of characteristic X-rays of nitrogen was obtained.

An average value (Nave.) of N intensity was calculated for the obtained EPMA image.

Moreover, for a field of view in which the positive electrode mixed material layer was equally divided into 5 regions in the thickness direction, average values of N intensity in these 5 regions (denoted as N1, N2, N3, N4, and N5 from a region at the current collector-side) were calculated. The maximum value among N1 to N5 was taken to be Nmax, and then the degree of nitrogen segregation was calculated by the following formula (1).

$$\text{Degree of nitrogen segregation} = \text{Nmax}/\text{Nave.} \quad (1)$$

<Viscosity stability>

The viscosity $\eta 0$ of an obtained slurry composition was measured using a B-type viscometer (produced by Toki Sangyo Co., Ltd.; product name: TVB-10; rotation speed: 60 rpm). Next, the slurry composition for which the viscosity had been measured was stirred for 72 hours using a planetary mixer (rotation speed: 60 rpm), and the viscosity $\eta 1$ of the slurry composition after stirring was measured using the same B-type viscometer as described above (rotation speed: 60 rpm). A viscosity maintenance rate $\Delta \eta$ of the slurry composition between before and after stirring was calculated ($\Delta \eta = \eta 1/\eta 0 \times 100(\%)$), and then viscosity stability of the slurry composition was evaluated by the following standard. Note that the temperature during viscosity measurement was 25°C. A value of closer to 100% for the viscosity maintenance rate $\Delta \eta$ indicates that the slurry composition has better viscosity stability.

A: Viscosity maintenance rate $\Delta \eta$ of not less than 90% and less than 110%

B: Viscosity maintenance rate $\Delta \eta$ of not less than 110% and less than 130%

C: Viscosity maintenance rate $\Delta \eta$ of not less than 130% and less than 150%

D: Viscosity maintenance rate $\Delta \eta$ of more than 150%

<Rate characteristics>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was charged to 4.3 V by a 0.1C constant-current method and was subsequently discharged to 3.0 V at 0.1C so as to determine the 0.1C discharge capacity. Next, the lithium ion secondary battery was charged to 4.3 V at 0.1C and was subsequently discharged to 3.0 V at 1C so as to determine the 1C discharge capacity. These measurements were performed with respect to 10 lithium ion secondary battery cells, and average values of the measured values were taken to be the 0.1C discharge capacity (a) and the 1C discharge capacity (b). A capacity retention rate expressed by $\Delta C = b/a \times 100(\%)$ was calculated and was evaluated by the following standard. A larger value for $\Delta C$ indicates that the lithium ion secondary battery has better rate characteristics.

A: $\Delta C$ of 90% or more
B: $\Delta C$ of not less than 80% and less than 90%
C: $\Delta C$ of not less than 50% and less than 80%
D: $\Delta C$ of less than 50%

<Initial capacity>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging of the lithium ion secondary battery was performed with a 0.2C constant current (upper limit cell voltage 4.20 V) and CC discharging of the lithium ion secondary battery was performed to a cell voltage of 3.00 V with a 0.2C constant current. This charging and discharging at 0.2C was repeated three times.

The discharge capacity of the 3rd cycle was taken to be the initial capacity, and the value of initial capacity/theoretical capacity was evaluated by the following standard. A larger value indicates that the lithium ion secondary battery has a higher initial discharge capacity.

A: Initial capacity/theoretical capacity of 0.78 or more
B: Initial capacity/theoretical capacity of not less than 0.75 and less than 0.78
C: Initial capacity/theoretical capacity of not less than 0.73 and less than 0.75
D: Initial capacity/theoretical capacity of less than 0.73

<Cycle characteristics>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging of the lithium ion secondary battery was performed by a 0.2C constant-current method (upper limit cell voltage 4.20 V) and CC discharging of the lithium ion secondary battery was performed to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 45°C. The discharge capacity of the 1st cycle was defined as X1 and the discharge capacity of the 100th cycle was defined as X2. A capacity maintenance rate expressed by $\Delta C' = (X2/X1) \times 100(\%)$ was calculated using the discharge capacity X1 and the discharge capacity X2, and was evaluated by the following standard. A larger value for $\Delta C'$ indicates that the lithium ion secondary battery has better cycle characteristics.

A: $\Delta C'$ of 93% or more
B: $\Delta C'$ of not less than 90% and less than 93%
C: $\Delta C'$ of not less than 87% and less than 90%
D: $\Delta C'$ of less than 87%

(Example 1)

<Production of polymer A>

A 1 L septum-equipped flask including a stirrer was charged with 100 parts of toluene, 4 parts of 1-vinylimidazole as a monomer including a nitrogen-containing heterocycle, 1 part of styrene as an aromatic vinyl monomer, and 0.6 parts of azobisisobutyronitrile (AIBN) as a polymerization initiator, the gas phase was purged with nitrogen gas, the temperature was raised to 90°C, and then 2 hours of stirring was performed to yield a toluene solution of a polymer A.

The obtained toluene solution of the polymer A and an appropriate amount of NMP as an organic solvent were mixed. Next, toluene contained in the resultant mixture was completely evaporated under reduced pressure to yield an NMP solution of the polymer A.

The weight-average molecular weight of the obtained polymer A was measured. The result is shown in Table 1.

<Production of polymer B>

A reactor was charged, in order, with 180 parts of deionized water, 25 parts of sodium dodecylbenzenesulfonate aqueous solution of 10% in concentration, 35 parts of acrylonitrile as a nitrile group-containing monomer, and 0.5 parts of t-dodecyl mercaptan as a chain transfer agent. Next, gas inside the reactor was purged three times with nitrogen, and then 65 parts of 1,3-butadiene as a conjugated diene monomer capable of introducing a linear alkylene structural unit into a polymer was added. The reactor was maintained at 10°C while 0.1 parts of cumene hydroperoxide as a polymerization initiator, a reductant, and an appropriate amount of a chelating agent were added, and a polymerization reaction was continued under stirring. At the point at which the polymerization conversion rate reached 85%, 0.1 parts of hydroquinone aqueous solution of 10% in concentration as a polymerization inhibitor was added so as to stop the polymerization reaction. Next, residual monomer was removed at a water temperature of 80°C to yield a water dispersion of a polymer precursor (particulate polymer).

The obtained water dispersion of the precursor and a palladium catalyst (solution obtained by mixing 1% palladium acetate acetone solution with an equal weight of deionized water) were added into an autoclave such that the palladium content was 3,000 ppm relative to the weight of solid content contained in the water dispersion, and a hydrogenation reaction was performed at a hydrogen pressure of 3 MPa and a temperature of 50°C for 6 hours to yield a water dispersion of a target polymer B.

The water dispersion of the polymer B and an appropriate amount of NMP as an organic solvent were mixed. Next, water contained in the resultant mixture was completely evaporated under reduced pressure to yield an NMP solution of the polymer B (hydrogenated nitrile butadiene rubber).

The weight-average molecular weight and iodine value of the obtained polymer B were measured. The results are shown in Table 1.

<Production of conductive material paste>

A disper blade was used to stir (3,000 rpm, 10 minutes) 12.0 parts of acetylene black as a conductive material, 0.6 parts (in terms of solid content) of the NMP solution of the polymer A, and 86.2 parts of NMP. After this stirring, 1 hour of mixing was performed at a circumferential speed of 8 m/s by a bead mill in which zirconia beads of 1 mm in diameter were used. Thereafter, 1.2 parts (in terms of solid content) of the NMP solution of the polymer B was added and a further 1 hour of mixing was performed to produce a conductive material paste having a solid content concentration of 13.8%.

<Production of slurry composition for positive electrode>

A slurry composition for a positive electrode was produced by adding 2.3 parts (in terms of solid content) of the conductive material paste, 1.5 parts of polyvinylidene fluoride as a binder, and NMP as a dispersion medium to 100 parts of a ternary active material having a layered structure ($LiNi_{0.5}Co_{0.2}Mn_{0.3}O_2$; average particle diameter: 10 $\mu$m) as a positive electrode active material and performing stirring thereof (60 rpm, 30 minutes) in a planetary mixer. Note that the additive amount of NMP was adjusted such that the viscosity of the obtained slurry composition for a positive electrode (measured by single cylinder rotary viscometer in accordance with JIS Z8803:1991; temperature: 25°C; rotation speed: 60 rpm) was within a range of 4,000 mPa·s to 5,000 mPa·s. The viscosity stability of the obtained slurry composition for a positive electrode was evaluated. The result is shown in Table 1.

<Production of positive electrode>

Aluminum foil of 20 $\mu$m in thickness was prepared as a current collector. The slurry composition for a positive electrode was applied onto the aluminum foil by a comma coater at a rate of 3 m/min such as to have a coating weight after drying of 20 mg/cm$^2$. After application, the slurry composition for a positive electrode on the aluminum foil was dried at 90°C for 20 minutes and at 120°C for 20 minutes, and was then heat treated at 60°C for 10 hours to obtain a positive electrode web. This positive electrode web was rolled by roll pressing to produce a sheet-shaped positive electrode including aluminum foil and a positive electrode mixed material layer of 3.2 g/cm$^3$ in density. The thickness of the sheet-shaped positive electrode was 70 $\mu$m (i.e., the thickness of the positive electrode mixed material layer was 50 $\mu$m). This sheet-shaped positive electrode was cut to 4.8 mm in width and 50 cm in length to obtain a positive electrode.

<Production of negative electrode>

A slurry composition for a negative electrode was produced by stirring a mixture of 90 parts of spherical artificial graphite (volume-average particle diameter: 12 $\mu$m) and 10 parts of $SiO_x$ (volume-average particle diameter: 10 $\mu$m) as negative electrode active materials with 1 part of a styrene butadiene polymer as a binder, 1 part of carboxymethyl cellulose as a thickener, and an appropriate amount of water as a dispersion medium in a planetary mixer.

Next, copper foil of 15 $\mu$m in thickness was prepared as a current collector. The slurry composition for a negative electrode was applied onto both sides of the copper foil such as to have a coating weight after drying of 10 mg/cm$^2$ at each side, and was dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including copper foil and negative electrode mixed material layers (both sides) of 1.8 g/cm$^3$ in density. The sheet-shaped negative electrode was cut to 5.0 mm in width and 52 cm in length to obtain a negative electrode.

<Preparation of separator>

A separator made of a single layer of polypropylene (produced by Celgard, LLC.; product name: Celgard 2500) was cut out as 120 cm × 5.5 mm.

<Production of lithium ion secondary battery>

The positive electrode and the negative electrode were wound up with the separator in-between using a core of 20 mm in diameter so as to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, an electrolyte solution (chemical composition: $LiPF_6$ solution of 1.0 M in concentration (solvent: mixed solution obtained by adding 5 mass% of fluoroethylene carbonate to a mixed solvent of ethylene carbonate/ethyl methyl carbonate = 3/7 (mass ratio); additive: 2 volume% of vinylene carbonate)) was prepared.

Thereafter, the compressed roll was housed inside a laminate case made of aluminum together with 3.2 g of the electrolyte solution. A nickel lead was connected to a specific location on the negative electrode, an aluminum lead was connected to a specific location on the positive electrode, and then an opening of the case was heat sealed so as to obtain a lithium ion secondary battery. This lithium ion secondary battery had a pouch shape of 35 mm in width, 48 mm in height, and 5 mm in thickness, and the nominal capacity of the battery was 700 mAh. The rate characteristics, initial capacity, and cycle characteristics of the obtained lithium ion secondary battery were evaluated. Moreover, the obtained lithium ion secondary battery was dismantled so as to remove the positive electrode and measure the degree of nitrogen segregation in the positive electrode mixed material layer. The results are shown in Table 1.

(Examples 2 and 3)

The amount of AIBN used in production of a polymer A was changed from 0.6 parts to 0.9 parts (Example 2) or 0.3 parts (Example 3). With the exception of the above, a polymer A, a polymer B, a conductive material paste, a slurry composition for a positive electrode, a positive electrode, a negative electrode, a separator, and a lithium ion secondary battery were prepared, and various measurements and evaluations were performed in the same way as in Example 1. The results are shown in Table 1.

(Example 4)

Acrylonitrile as a nitrile group-containing monomer was used instead of styrene as an aromatic vinyl monomer in production of a polymer A. With the exception of the above, a polymer A, a polymer B, a conductive material paste, a slurry composition for a positive electrode, a positive electrode, a negative electrode, a separator, and a lithium ion secondary battery were prepared, and various measurements and evaluations were performed in the same way as in Example 1. The results are shown in Table 1.

(Example 5)

4-Vinylpyridine was used instead of 1-vinylimidazole as a monomer including a nitrogen-containing heterocycle in production of a polymer A. With the exception of the above, a polymer A, a polymer B, a conductive material paste, a slurry composition for a positive electrode, a positive electrode, a negative electrode, a separator, and a lithium ion secondary battery were prepared, and various measurements and evaluations were performed in the same way as in Example 1. The results are shown in Table 1.

(Example 6)

A polymer B, a conductive material paste, and a slurry composition for a positive electrode were produced as described below. With the exception of the above, a polymer A, a positive electrode, a negative electrode, a separator, and a lithium ion secondary battery were prepared, and various measurements and evaluations were performed in the same way as in Example 1. The results are shown in Table 1.

<Production of polymer B>

A reactor was charged, in order, with 180 parts of deionized water, 25 parts of sodium dodecylbenzenesulfonate aqueous solution of 10% in concentration, 23 parts of acrylonitrile as a nitrile group-containing monomer, 43 parts of styrene as an aromatic vinyl monomer, 5 parts of methacrylic acid as an acidic group-containing monomer, and 2 parts of t-dodecyl mercaptan as a chain transfer agent. Next, gas inside the reactor was purged three times with nitrogen, and then 29 parts of 1,3-butadiene as a conjugated diene monomer capable of introducing a linear alkylene structural unit into a polymer was added. Subsequent operations were performed in the same way as in Example 1 to yield an NMP solution of a polymer B (hydrogenated styrene-butadiene-nitrile rubber).

<Production of conductive material paste>

A disper blade was used to stir (3,000 rpm, 10 minutes) 3.0 parts of multi-walled carbon nanotubes (BET specific surface area: 150 m$^2$/g) as a conductive material, 0.3 parts (in terms of solid content) of an NMP solution of a polymer A obtained in the same way as in Example 1, and 96.1 parts of NMP. After this stirring, 1 hour of mixing was performed at a circumferential speed of 8 m/s by a bead mill in which zirconia beads of 1 mm in diameter were used. Thereafter, 0.6 parts (in terms of solid content) of the NMP solution of the polymer B was added and a further 1 hour of mixing was performed to produce a conductive material paste having a solid content concentration of 3.9%.

<Production of slurry composition for positive electrode>

A slurry composition for a positive electrode was produced in the same way as in Example 1 with the exception that 1.3 parts (in terms of solid content) of the conductive material paste obtained as described above was used.

(Example 7)

In production of a polymer A, the amount of 1-vinylimidazole as a monomer including a nitrogen-containing heterocycle was changed from 4 parts to 5 parts, and styrene as an aromatic vinyl monomer was not used. With the exception of the above, a polymer A, a polymer B, a conductive material paste, a slurry composition for a positive electrode, a positive electrode, a negative electrode, a separator, and a lithium ion secondary battery were prepared, and various measurements and evaluations were performed in the same way as in Example 1. The results are shown in Table 1.

(Example 8)

A conductive material paste was produced as described below. With the exception of the above, a polymer A, a polymer B, a slurry composition for a positive electrode, a positive electrode, a negative electrode, a separator, and a lithium ion secondary battery were prepared, and various measurements and evaluations were performed in the same way as in Example 1. The results are shown in Table 2.

<Production of conductive material paste>

A disper blade was used to stir (3,000 rpm, 10 minutes) 12.0 parts of acetylene black as a conductive material, 0.6 parts (in terms of solid content) of an NMP solution of a polymer A obtained in the same way as in Example 1, 1.2 parts (in terms of solid content) of an NMP solution of a polymer B obtained in the same way as in Example 1, and 86.2 parts of NMP. After this stirring, 2 hours of mixing was performed at a circumferential speed of 8 m/s by a bead mill in which zirconia beads of 1 mm in diameter were used so as to produce a conductive material paste.

(Example 9)

A conductive material paste and a slurry composition for a positive electrode were produced as described below. With the exception of the above, a polymer A, a polymer B, a positive electrode, a negative electrode, a separator, and a lithium ion secondary battery were prepared, and various measurements and evaluations were performed in the same way as in Example 1. The results are shown in Table 2.

<Production of conductive material paste>

A disper blade was used to stir (3,000 rpm, 10 minutes) 6.0 parts of acetylene black as a conductive material, 3.0 parts (in terms of solid content) of an NMP solution of a polymer A obtained in the same way as in Example 1, and 90.4 parts of NMP. After this stirring, 1 hour of mixing was performed at a circumferential speed of 8 m/s by a bead mill in which zirconia beads of 1 mm in diameter were used. Thereafter, 0.6 parts (in terms of solid content) of an NMP solution of a polymer B obtained in the same way as in Example 1 was added, and a further 1 hour of mixing was performed to produce a conductive material paste.

<Production of slurry composition for positive electrode>

A slurry composition for a positive electrode was produced in the same way as in Example 1 with the exception that 3.2 parts (in terms of solid content) of the conductive material paste obtained as described above was used.

(Comparative Example 1)

A conductive material paste was produced as described below without producing a polymer A. With the exception of the above, a polymer B, a slurry composition for a positive electrode, a positive electrode, a negative electrode, a separator, and a lithium ion secondary battery were prepared, and various measurements and evaluations were performed in the same way as in Example 1. The results are shown in Table 2.

<Production of conductive material paste>

A disper blade was used to stir (3,000 rpm, 10 minutes) 12.0 parts of acetylene black as a conductive material, 0.6 parts (in terms of solid content) of 1-cyanoethyl-2-ethyl-4-methylimidazole (molecular weight: 163), and 86.2 parts of NMP. After this stirring, 1 hour of mixing was performed at a circumferential speed of 8 m/s by a bead mill in which zirconia beads of 1 mm in diameter were used. Thereafter, 1.2 parts (in terms of solid content) of a polymer B obtained in the same way as in Example 1 was added, and a further 1 hour of mixing was performed to produce a conductive material paste.

(Comparative Example 2)

The amount of AIBN was changed from 0.6 parts to 0.1 parts in production of a polymer A. With the exception of the above, a polymer A, a polymer B, a conductive material paste, a slurry composition for a positive electrode, a positive electrode, a negative electrode, a separator, and a lithium ion secondary battery were prepared, and various measurements and evaluations were performed in the same way as in Example 1. The results are shown in Table 2.

(Comparative Example 3)

A conductive material paste and a slurry composition for a positive electrode were produced as described below without producing a polymer A. With the exception of the above, a polymer B, a negative electrode, a separator, and a lithium ion secondary battery were prepared, and various measurements and evaluations were performed in the same way as in Example 1. The results are shown in Table 2.

<Production of conductive material paste>

A disper blade was used to stir (3,000 rpm, 10 minutes) 12.0 parts of acetylene black as a conductive material, 1.2 parts (in terms of solid content) of the polymer B, and 86.8 parts of NMP. After this stirring, 2 hours of mixing was performed at a circumferential speed of 8 m/s by a bead mill in which zirconia beads of 1 mm in diameter were used so as to produce a conductive material paste.

<Production of slurry composition for positive electrode>

A slurry composition for a positive electrode was produced in the same way as in Example 1 with the exception that 2.2 parts (in terms of solid content) of the conductive material paste obtained as described above was used.

(Comparative Example 4)

A conductive material paste and a slurry composition for a positive electrode were produced as described below without producing a polymer B. With the exception of the above, a polymer A, a negative electrode, a separator, and a lithium ion secondary battery were prepared, and various measurements and evaluations were performed in the same way as in Example 1. The results are shown in Table 2.

<Production of conductive material paste>

A disper blade was used to stir (3,000 rpm, 10 minutes) 12.0 parts of acetylene black as a conductive material, 0.6 parts (in terms of solid content) of the polymer A, and 87.4 parts of NMP. After this stirring, 2 hours of mixing was performed at a circumferential speed of 8 m/s by a bead mill in which zirconia beads of 1 mm in diameter were used so as to produce a conductive material paste.

<Production of slurry composition for positive electrode>

A slurry composition for a positive electrode was produced in the same way as in Example 1 with the exception that 2.1 parts (in terms of solid content) of the conductive material paste obtained as described above was used.

(Comparative Example 5)

A polymer A (solid substance), a conductive material paste, a slurry composition for a positive electrode, and a lithium ion secondary battery were prepared as described below. With the exception of the above, a polymer B, a negative electrode, and a separator were prepared, and various measurements and evaluations were performed in the same way as in Example 1. The results are shown in Table 2.

<Production of polymer A (solid substance)>

A 1 L septum-equipped flask including a stirrer was charged with 100 parts of toluene, 4 parts of 1-vinylimidazole as a monomer including a nitrogen-containing heterocycle, 1 part of styrene as an aromatic vinyl monomer, and 0.6 parts of AIBN as a polymerization initiator, the gas phase was purged with nitrogen gas, the temperature was raised to 90°C, and then 2 hours of stirring was performed to yield a toluene solution of a polymer A.
Toluene contained in the obtained toluene solution of the polymer A was completely evaporated under reduced pressure to obtain the polymer A (solid substance).

<Production of conductive material paste>

A disper blade was used to stir (3,000 rpm, 10 minutes) 12.0 parts of acetylene black as a conductive material, 1.2 parts (in terms of solid content) of a polymer B obtained in the same way as in Example 1, and 86.8 parts of NMP. After this stirring, 2 hours of mixing was performed at a circumferential speed of 8 m/s by a bead mill in which zirconia beads of 1 mm in diameter were used so as to produce a conductive material paste having a solid content concentration of 13.8%.

<Production of slurry composition for positive electrode>

A slurry composition for a positive electrode was produced in the same way as in Example 1 with the exception that 2.2 parts (in terms of solid content) of the conductive material paste obtained as described above was used.

<Production of lithium ion secondary battery>

A lithium ion secondary battery was produced in the same way as in Example 1 with the exception that an electrolyte solution obtained by further dissolving the polymer A (solid substance) described above with a concentration of 15 mg/g in an electrolyte solution having the same chemical composition as the electrolyte solution used in Example 1 was used.
In Tables 1 and 2, shown below:

"CEEMI" indicates 1-cyanoethyl-2-ethyl-4-methylimidazole;
"Mw" indicates weight-average molecular weight;
"NMC" indicates $LiNi_{0.5}Co_{0.2}Mn_{0.3}O_2$;
"AB" indicates acetylene black;
"CNT" indicates multi-walled carbon nanotubes;
"PVDF" indicates polyvinylidene fluoride;
"HNBR" indicates hydrogenated nitrile butadiene rubber; and
"HSNBR" indicates hydrogenated styrene-butadiene-nitrile rubber.

Table 1

| | | | | Example 1 | Example 2 | Example 3 | Example 4 | Example 5 | Example 6 | Example 7 |
|---|---|---|---|---|---|---|---|---|---|---|
| Positive electrode | Polymer A, etc. | Chemical composition | Vinylimidazole units [mass%] | 80 | 80 | 80 | 80 | - | 80 | 100 |
| | | | Vinylpyridine monomer units [mass%] | - | - | - | - | 80 | - | - |
| | | | Styrene units [mass%] | 20 | 20 | 20 | - | 20 | 20 | - |
| | | | Acrylonitrile units [mass%] | - | - | - | 20 | - | - | - |
| | | Mw [-] | | 1,000 | 400 | 50,000 | 1,000 | 1,000 | 1,000 | 1,000 |
| | | Content [parts by mass] | | 0.1 | 0.1 | 0.1 | 0.1 | 0.1 | 0.1 | 0.1 |
| | Positive electrode active material | Type | | NMC | NMC | NMC | NMC | NMC | NMC | NMC |
| | | Content [parts by mass] | | 100 | 100 | 100 | 100 | 100 | 100 | 100 |
| | Conductive material | Type | | AB | AB | AB | AB | AB | CNT | AB |
| | | Content [parts by mass] | | 2 | 2 | 2 | 2 | 2 | 1 | 2 |
| | Binder | Type | | PVDF | PVDF | PVDF | PVDF | PVDF | PVDF | PVDF |
| | | Content [parts by mass] | | 1.5 | 1.5 | 1.5 | 1.5 | 1.5 | 1.5 | 1.5 |
| | Polymer B | Type | | HNBR | HNBR | HNBR | HNBR | HNBR | HSNBR | HNBR |
| | | Iodine value [mg/100 mg] | | 50 | 50 | 50 | 50 | 50 | 50 | 50 |
| | | Mw [-] | | 300,000 | 300,000 | 300,000 | 300,000 | 300,000 | 300,000 | 300,000 |
| | | Content [parts by mass] | | 0.2 | 0.2 | 0.2 | 0.2 | 0.2 | 0.2 | 0.2 |
| | Content ratio of polymer A, etc./conductive material [-] | | | 0.05 | 0.05 | 0.05 | 0.05 | 0.05 | 0.1 | 0.05 |
| | Degree of nitrogen segregation [-] | | | 1.2 | 1.2 | 1.2 | 1.2 | 1.2 | 1.2 | 1.2 |
| Paste production | | Prior addition of polymer A | | Yes | Yes | Yes | Yes | Yes | Yes | Yes |
| | | Single addition of polymers A and B | | - | - | - | - | - | - | - |

(continued)

| | | Example 1 | Example 2 | Example 3 | Example 4 | Example 5 | Example 6 | Example 7 |
|---|---|---|---|---|---|---|---|---|
| Battery production | Addition of polymer A to electrolyte solution | - | - | - | - | - | - | - |
| Viscosity stability | | A | A | A | A | A | A | B |
| Rate characteristics | | A | B | A | A | A | A | A |
| Initial capacity | | A | A | A | A | A | A | A |
| Cycle characteristics | | A | A | B | A | A | A | A |

Table 2

| | | | | Example 8 | Example 9 | Comparative Example 1 | Comparative Example 2 | Comparative Example 3 | Comparative Example 4 | Comparative Example 5 |
|---|---|---|---|---|---|---|---|---|---|---|
| Positive electrode | Polymer A, etc. | Chemical composition | Vinylimidazole units [mass%] | 80 | 80 | CEEMI | 80 | - | 80 | - |
| | | | Vinylpyridine monomer units [mass%] | - | - | | - | - | - | - |
| | | | Styrene units [mass%] | 20 | 20 | | 20 | - | 20 | - |
| | | | Acrylonitrile units [mass%] | - | - | | - | - | - | - |
| | | Mw [-] | | 1,000 | 1,000 | 163 | 100,000 | - | 1000 | - |
| | | Content [parts by mass] | | 0.1 | 1 | 0.1 | 0.1 | - | 0.1 | - |
| | Positive electrode active material | Type | | NMC | NMC | NMC | NMC | NMC | NMC | NMC |
| | | Content [parts by mass] | | 100 | 100 | 100 | 100 | 100 | 100 | 100 |
| | Conductive material | Type | | AB | AB | AB | AB | AB | AB | AB |
| | | Content [parts by mass] | | 2 | 2 | 2 | 2 | 2 | 2 | 2 |
| | Binder | Type | | PVDF | PVDF | PVDF | PVDF | PVDF | PVDF | PVDF |
| | | Content [parts by mass] | | 1.5 | 1.5 | 1.5 | 1.5 | 1.5 | 1.5 | 1.5 |
| | Polymer B | Type | | HNBR | HNBR | HNBR | HNBR | HNBR | - | HNBR |
| | | Iodine value [mg/100 mg] | | 50 | 50 | 50 | 50 | 50 | - | 50 |
| | | Mw [-] | | 300,000 | 300,000 | 300,000 | 300,000 | 300,000 | - | 300,000 |
| | | Content [parts by mass] | | 0.2 | 0.2 | 0.2 | 0.2 | 0.2 | - | 0.2 |
| | Content ratio of polymer A, etc./conductive material [-] | | | 0.05 | 0.5 | 0.05 | 0.05 | - | 0.05 | - |
| | Degree of nitrogen segregation [-] | | | 1.3 | 1.2 | 1.2 | 1.2 | 1.2 | 1.3 | 1.5 |

| | | Example 8 | Example 9 | Comparative Example 1 | Comparative Example 2 | Comparative Example 3 | Comparative Example 4 | Comparative Example 5 |
|---|---|---|---|---|---|---|---|---|
| Paste production | Prior addition of polymer A | - | Yes | Yes | Yes | - | - | - |
| | Single addition of polymers A and B | Yes | - | - | - | - | - | - |
| Battery production | Addition of polymer A to electrolyte solution | - | - | - | - | - | - | Yes |
| Viscosity stability | | B | B | A | A | A | D | A |
| Rate characteristics | | B | A | D | A | D | B | D |
| Initial capacity | | B | A | C | A | D | C | C |
| Cycle characteristics | | B | A | A | D | C | A | C |

It can be seen from Table 1 and 2 that in Examples 1to 9 in which the used positive electrode includes a positive electrode mixed material layer that contains specific polymers A and B in addition to a positive electrode active material and a conductive material and that has a degree of nitrogen segregation that is not more than a specific value, a secondary battery can be caused to display excellent battery characteristics. It can also be seen that a slurry composition for a positive electrode used to produce the positive electrode in each of Examples 1 to 9 has excellent viscosity stability.

In contrast, it can be seen that rate characteristics and initial capacity of a secondary battery deteriorate in Comparative Example 1 in which 1-cyanoethyl-2-ethyl-4-methylimidazole, which is a low-molecular weight non-polymer, is used instead of a polymer A.

It can also be seen that cycle characteristics of a secondary battery deteriorate in Comparative Example 2 in which the weight-average molecular weight of a polymer A exceeds a specific upper limit.

It can also be seen that rate characteristics, initial capacity, and cycle characteristics of a secondary battery deteriorate in Comparative Example 3 in which the used positive electrode includes a positive electrode mixed material layer that does not contain a polymer A.

It can also be seen that the initial capacity of a secondary battery decreases in Comparative Example 4 in which the used positive electrode includes a positive electrode mixed material layer that does not contain a polymer B. Moreover, it can be seen that viscosity stability of a slurry composition for a positive electrode used to produce the positive electrode is lost in Comparative Example 4.

Furthermore, it can be seen that in Comparative Example 5 in which the used positive electrode includes a positive electrode mixed material layer that does not contain a polymer A and in which a polymer A is added to the electrolyte solution, the degree of nitrogen segregation in the positive electrode mixed material layer exceeds a specific upper limit, and rate characteristics, initial capacity, and cycle characteristics of a secondary battery deteriorate.

INDUSTRIAL APPLICABILITY

According to the present disclosure, it is possible to provide a positive electrode for a secondary battery that can cause a secondary battery to display excellent battery characteristics and a secondary battery that has excellent battery characteristics.

**Claims**

1. A positive electrode for a secondary battery comprising a positive electrode mixed material layer and a current collector, wherein

   the positive electrode mixed material layer contains: a positive electrode active material; a conductive material; a polymer A including a nitrogen-containing heterocycle and having a weight-average molecular weight of not less than 300 and not more than 70,000; and a polymer B including a nitrile group, and
   the positive electrode mixed material layer has a degree of nitrogen segregation of 1.4 or less as calculated by formula (1), shown below,

$$\text{Degree of nitrogen segregation} = N_{max}/N_{ave}. \quad (1)$$

   where, in formula (1):

   $N_{ave}$. is an average value for intensity of characteristic X-rays of nitrogen in an EPMA image of a thickness direction cross-section of the positive electrode mixed material layer obtained using an electron probe microanalyzer (EPMA); and
   $N_{max}$ is a maximum value among average values for intensity of characteristic X-rays of nitrogen in 5 regions obtained by equally dividing the positive electrode mixed material layer in the EPMA image into 5 regions in a thickness direction.

2. The positive electrode for a secondary battery according to claim 1, wherein the positive electrode mixed material layer further contains a binder.

3. The positive electrode for a secondary battery according to claim 1 or 2, wherein

   the polymer B includes a nitrile group-containing monomer unit and an alkylene structural unit, and

the polymer B includes the nitrile group-containing monomer unit in a proportion of not less than 10 mass% and not more than 60 mass% and has an iodine value of 70 mg/100 mg or less.

4. The positive electrode for a secondary battery according to any one of claims 1 to 3, wherein the nitrogen-containing heterocycle is either or both of an optionally substituted imidazole ring and an optionally substituted pyridine ring.

5. The positive electrode for a secondary battery according to any one of claims 1 to 4, wherein

the polymer A includes a monomer unit including a nitrogen-containing heterocycle, and
the polymer includes the monomer unit including the nitrogen-containing heterocycle in a proportion of 50 mass% or more.

6. The positive electrode for a secondary battery according to any one of claims 1 to 5, wherein a mass ratio of content of the polymer A relative to content of the conductive material in the positive electrode mixed material layer is not less than 0.03 and not more than 1.0.

7. A secondary battery comprising the positive electrode for a secondary battery according to any one of claims 1 to 6.

| | INTERNATIONAL SEARCH REPORT | International application No. |
|---|---|---|
| | | PCT/JP2021/012070 |

**A. CLASSIFICATION OF SUBJECT MATTER**
C08L 15/00(2006.01)i; C08L 27/16(2006.01)i; C08L 39/04(2006.01)i; H01M
4/13(2010.01)i; H01M 4/62(2006.01)i
FI: H01M4/62 Z; H01M4/13; C08L15/00; C08L27/16; C08L39/04
According to International Patent Classification (IPC) or to both national classification and IPC

**B. FIELDS SEARCHED**

Minimum documentation searched (classification system followed by classification symbols)
C08L15/00; C08L27/16; C08L39/04; H01M4/13; H01M4/62

Documentation searched other than minimum documentation to the extent that such documents are included in the fields searched
Published examined utility model applications of Japan     1922–1996
Published unexamined utility model applications of Japan   1971–2021
Registered utility model specifications of Japan           1996–2021
Published registered utility model applications of Japan   1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 09-180705 A (YUASA CORPORATION) 11 July 1997 (1997-07-11) paragraphs [0001], [0011]-[0022] | 1, 4-5, 7 |
| A | paragraphs [0001], [0011]-[0022] | 2-3, 6 |
| A | JP 2000-311690 A (SEKISUI CHEMICAL CO., LTD.) 07 November 2000 (2000-11-07) paragraphs [0042], [0048] | 1-7 |
| A | JP 10-233339 A (JAPAN STORAGE BATTERY CO., LTD.) 02 September 1998 (1998-09-02) paragraphs [0033], [0038] | 1-7 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 June 2021 (02.06.2021) | 15 June 2021 (15.06.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2021/012070

| Patent Documents referred in the Report | Publication Date | Patent Family | Publication Date |
|---|---|---|---|
| JP 09-180705 A | 11 Jul. 1997 | (Family: none) | |
| JP 2000-311690 A | 07 Nov. 2000 | (Family: none) | |
| JP 10-233339 A | 02 Sep. 1998 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013008485 A
- WO 2019107463 A1
- JP 2012204303 A